# FASCICULE DE BREVET EUROPEEN

(11) **EP 2 783 091 B1**
(45) Date de publication et mention de la délivrance du brevet: **03.02.2016**
(21) Numéro de dépôt: 12806566.1
(22) Date de dépôt: 23.11.2012
(51) Int. Cl.: F02C 3/28, F01K 23/06, F01K 21/04, F02C 3/30, F25J 3/04

(54) **PROCÉDÉ ET APPAREIL D'ALIMENTATION EN AZOTE D'UNE CHAMBRE DE COMBUSTION**
VERFAHREN UND VORRICHTUNG ZUR ZUFÜHRUNG VON STICKSTOFF IN EINER BRENNKAMMER
METHOD AND DEVICE TO FEED A COMBUSTION CHAMBER WITH NITROGEN

(30) Priorité: 25.11.2011 FR 1160792
(43) Date de publication de la demande: 01.10.2014
(73) Titulaire: L'Air Liquide Société Anonyme pour l'Etude et l'Exploitation des Procédés Georges Claude, 75007 Paris (FR)
(72) Inventeur: DUBETTIER-GRENIER, Richard, F-94210 La Varenne Saint Hilaire (FR); GERARD, Sylvain, F-92210 Saint-Cloud (FR); JOLY, Loic, F-75018 Paris (FR)
(74) Mandataire: Mercey, Fiona Susan
(86) Numéro de dépôt international: PCT/FR2012/052716
(87) Numéro de publication internationale: WO 2013/076435

(56) Documents cités:
- US-A- 5 865 023
- US-A1- 2011 277 860
- SMITH A R ET AL: "NEXT-GENERATION INTEGRATION CONCEPTS FOR AIR SEPARATION UNITS AND GAS TURBINES", JOURNAL OF ENGINEERING FOR GAS TURBINES AND POWER, ASME, NEW YORK, NY, US, vol. 119, no. 2, 1 avril 1997 (1997-04-01) , pages 298-304, XP001032885, ISSN: 0742-4795 cité dans la demande

## Description

La présente invention concerne un procédé et appareil d'alimentation en azote d'une chambre de combustion.

Un appareil de séparation d'air est souvent utilisé pour alimenter en azote une chambre de combustion. Le carburant pour la chambre de combustion peut provenir d'une gazéification d'un combustible à l'oxygène, l'oxygène provenant également de l'appareil de séparation d'air.

La présente invention propose une méthode pour saturer en eau et préchauffer l'azote au cours de sa compression avant introduction dans la chambre de combustion. Cette invention permet la récupération de chaleur de l'appareil de séparation d'air vers la chambre de combustion et la diminution en besoin d'azote.

L'invention propose, en particulier, une méthode d'optimisation de l'efficacité d'une usine de production électrique par gazéification de charbon à l'oxygène et cycle combiné, ou IGCC en anglais.

Le gaz de synthèse produit par la gazéification du charbon en présence d'oxygène est généralement épuré de ses impuretés (par exemple mercure, composés soufrés, CO₂, ...) et dilué par un gaz inerte (i.e. non combustible ; par exemple azote, vapeur d'eau, CO₂,...) avant ou après être mélangé à un flux d'air et être introduit (sous pression) dans une chambre de combustion de laquelle les fumées seront détendues à travers une turbine génératrice.

Le rôle du gaz diluant est de limiter la vitesse de flamme dans la chambre de combustion, limiter le caractère oxydant du mélange gazeux et limiter les pics de température de flamme limitant ainsi la production d'oxydes d'azote à des teneurs conformes aux réglementations environnementales.

Dans le cas d'une gazéification à l'oxygène, le gaz inerte de dilution du gaz de synthèse est classiquement l'azote coproduit par l'appareil de séparation d'air (ASU), souvent additionné de vapeur d'eau pour améliorer la capacité d'inertage du gaz de dilution en plus d'apporter une plus grande quantité de chaleur sensible à la turbine. En effet, la capacité d'inertage du gaz de dilution étant directement liée à sa capacité calorifique, l'addition de vapeur à l'azote coproduit de l'appareil permet une meilleure réduction des contraintes thermiques dans la chambre de combustion que l'utilisation d'azote seul (pour un même débit volumique de fumées vers la turbine). La vapeur est également utilisée pour préchauffer le gaz de synthèse et/ou le mélange de gaz diluant pour améliorer la productivité de la turbine génératrice.

Bon nombre de documents décrivent une humidification de l'azote par contact direct substantiellement à la pression à laquelle l'azote doit rentrer dans la turbine à gaz, par exemple EP-A-1001149, US-A-5865023, US2007/0119176 et « Integration of Gas Turbine and Air Separation Unit for IGCC Power Plants » de Novem, 1993.

Le rapport Novem indique en plus que l'azote est comprimé à la pression de la chambre de combustion, mélangé avec du gaz de synthèse et ensuite saturé en eau (Figure 7).

US-A-2011/0277860 décrit la compression d'azote sec destiné une turbine à gaz, sans humidification aucune.

La présente invention propose une méthode de préchauffage et saturation de l'azote de dilution en minimisant voire en supprimant l'utilisation de vapeur, permettant de maximiser l'utilisation de la vapeur par ailleurs (par exemple, la production d'électricité), et de limiter la portion d'azote prélevée à l'appareil de séparation d'air devant être comprimé pour constituer le gaz de dilution.

L'azote de dilution provenant de l'appareil de séparation d'air (par exemple à une pression de 4 bar abs) doit être comprimé pour atteindre la pression de la chambre de combustion (i.e. entre 15 et 100 bar abs) ; cette compression peut être faite par un compresseur radial multi-intégré entraîné par un moteur électrique ou par une turbine à vapeur. Au cours de la compression de l'azote de dilution, l'invention propose de saturer en vapeur d'eau l'azote de dilution au moyen de contacteurs gaz-liquide alimentés par l'azote et un flux d'eau sous forme liquide.

De préférence, à la sortie de chaque étage de compression, l'azote de dilution est saturé en vapeur d'eau par ce moyen. A l'issue de la compression, l'azote peut être réchauffé par échange de chaleur avec un fluide chauffé au contact de l'air comprimé alimentant l'appareil de séparation d'air ; le niveau de température atteint par l'azote comprimé est ici de l'ordre de 200-250°C. L'azote peut alors être à nouveau enrichi en eau, voire saturé, par un nouveau contacteur gaz-liquide. Enfin, l'azote, éventuellement saturé en eau, peut être surchauffé (réchauffeur électrique ou à la vapeur ou échange avec un autre fluide de l'ASU), classiquement de 50°C à 100°C au dessus de son point de saturation avant d'être dirigé vers la chambre de combustion.

Par ailleurs, le flux d'eau utilisé dans les contacteurs gaz-liquide pour la saturation peut être préchauffé par un fluide de l'ASU (comme de l'air en sortie du compresseur principal d'air ou d'un surpresseur d'air) jusqu'à une température de l'ordre de 150°C afin de maximiser la quantité d'eau introduite par saturation du flux d'azote. Cette optimisation est pertinente surtout pour les injections situées en aval des étages de compression.

En effet, les contacteurs intermédiaires, servant à saturer en eau l'azote comprimé, ont également pour rôle de refroidir le gaz avant l'étage de compression suivant et ainsi améliorant l'efficacité de la compression. Préchauffer l'eau servant à la saturation de l'azote dans les étages de compression intermédiaires réduirait donc l'efficacité de la compression.

L'humidification entre deux étages de compression permet d'atteindre des degrés d'humidification élevés (plus de 10% d'eau dans l'azote), sans que la compression coûte trop d'énergie, grâce au refroidissement de l'azote entre deux étages. Une compression adiabatique suivie d'une humidification comme préconisé dans « Next-Generation Integration Concepts for Air Separation Units and Gas Turbines » de Smith et al, Transactions of the ASME, Vol 119, avril 1997, permet d'atteindre la même teneur en eau. Or l'énergie de compression est beaucoup plus élevée.

Le débit d'eau alimentant les contacteurs gaz-liquide est ajusté de façon à ce qu'il n'y ait aucun condensat en sortie des contacteurs ; en effet, un débit supérieur à cette limite engendrerait des pertes thermiques, dégradant l'intérêt de l'invention.

L'invention permet donc de produire un mélange préchauffé de gaz de dilution azote-vapeur d'eau sans prélèvement de vapeur ; la vapeur d'eau est donc avantageusement valorisée à la turbine génératrice (sauf celle éventuellement utilisée au surchauffeur), sans non plus prélèvement de chaleur sur le flux d'air sortant du turbocompresseur et alimentant la chambre de combustion.

En résumé, cette invention peut permettre de transférer de la chaleur de l'appareil de séparation d'air vers la chambre de combustion de la turbine , de diminuer l'azote prélevé à l'appareil comme gaz de dilution et enfin de diminuer la charge massique vers la turbine alimentée par la chambre de combustion (à iso-énergie) et maintenir les contraintes mécaniques du rotor dans les limites requises. Cette invention s'applique par exemple à une unité de gazéification de charbon ou de coke de pétrole ou de résidu lourd à l'oxygène (voire à l'air), avec ou sans système de capture de CO₂.

La solution proposée a été comparée à une solution où l'azote de dilution n'est pas dilué à la vapeur. Dans cet exemple, les contacteurs ont été placés en sortie du premier et du deuxième étage de compression d'un compresseur à trois étages (pas de contacteurs en aval du dernier étage de compression).

Pour une centrale IGCC de 450 MWe utilisant dans le cas de référence 204 000 Nm³/h d'azote de dilution, l'innovation proposée permet, à enthalpie constante, d'introduire 10 000 Nm³/h de vapeur se substituant à 13 000 Nm³/h d'azote sous pression.

Le gain électrique résultant sur les machines de l'unité de séparation d'air est d'environ 1,2 MW soit 0,3% de la production électrique totale de la centrale IGCC.

Comparé à une compression adiabatique avec saturation finale uniquement, (cas de l'article de Smith et al) le compresseur d'azote avec une humidification d'azote entre deux étages consomme beaucoup moins d'énergie pour une quantité d'eau similaire.

Comparé à une compression centrifuge avec saturation finale uniquement, le compresseur d'azote avec une humidification d'azote entre deux étages permet d'introduire beaucoup plus d'eau (8% contre 2%).

Dans une variante de l'invention, l'azote issu de l'appareil de séparation d'air peut être aussi saturé en eau dès l'entrée du compresseur, ce qui permet de produire de l'eau glacée et permettre de réduire la consommation énergétique du groupe frigorifique en amont de l'unité de purification d'air par adsorption.

Selon un objet de l'invention, il est prévu un procédé d'alimentation en azote d'une chambre de combustion dans lequel : de l'azote gazeux est soutiré d'un appareil de séparation d'air à une première pression, l'azote est comprimé dans un compresseur d'azote et envoyé à une chambre de combustion à une deuxième pression, qui est la pression de sortie du dernier étage du compresseur d'azote caractérisé en ce que le compresseur d'azote comprend au moins deux étages et entre deux étages du compresseur d'azote, l'azote est humidifié par contact direct en passant dans un contacteur alimenté en tête par de l'eau et l'azote humidifié est comprimé dans au moins un étage du compresseur d'azote

Selon un objet de l'invention, il est prévu un procédé d'alimentation en azote d'une chambre de combustion dans lequel : de l'azote gazeux est soutiré d'un appareil de séparation d'air à une première pression, l'azote est comprimé dans au moins deux étages d'un compresseur d'azote et envoyé à une chambre de combustion à une deuxième pression, qui est la pression de sortie du dernier étage du compresseur d'azote caractérisé en ce qu'entre deux étages du compresseur d'azote, l'azote est humidifié par contact direct en passant dans un contacteur alimenté en tête par de l'eau et l'azote humidifié est comprimé dans au moins un étage du compresseur d'azote et envoyé à la chambre de combustion.

Selon d'autres aspects facultatifs :
- toute l'eau envoyée au contacteur est transférée au flux gazeux d'azote.
- l'eau envoyée au contacteur est à une température qui diffère au plus de 10°C, voire de 5°C, de la température ambiante.
- l'eau envoyée au contacteur est à la température ambiante.
- l'azote est également humidifié dans un contacteur en aval du dernier étage du compresseur d'azote.
- l'eau envoyée dans le contacteur en aval du dernier étage du compresseur d'azote est préchauffée par un flux de l'unité de séparation d'air.
- l'azote est humidifié uniquement par contact direct avec de l'eau.
- un gaz de la chambre de combustion est détendu dans une turbine.
- la chambre de combustion est alimentée par un carburant provenant d'une unité de gazéification, l'unité de gazéification étant alimenté par de l'oxygène gazeux provenant de l'appareil de séparation d'air.
- seule une partie de l'eau envoyée au contacteur est transférée au flux gazeux d'azote et l'eau excédentaire sortant du contacteur sous forme liquide est utilisée comme eau glacée dans l'unité de séparation d'air.

Selon un autre objet de l'invention, il est prévu un appareil d'alimentation en azote d'une chambre de combustion comprenant un compresseur, au moins un contacteur à contact direct disposé pour recevoir de l'azote comprimé provenant d'un étage du compresseur ainsi que des moyens pour envoyer de l'eau à l'au moins un contacteur, au moins une conduite pour envoyer de l'azote comprimé du dernier étage du compresseur à la chambre de combustion caractérisé en ce que le compresseur ayant au moins deux étages, en ce que le contacteur est relié en aval d'un étage du compresseur et en amont d'un autre étage du compresseur pour recevoir de l'azote comprimé et pour envoyer de l'azote humidifié à l'étage suivant, des moyens pour envoyer de l'azote comprimé et humidifié du dernier étage du compresseur à la chambre de combustion à travers l'au moins une conduite.

L'appareil peut comprendre des moyens pour humidifier l'azote par contact direct en aval du dernier étage du compresseur ou pas.

Le contacteur constitue de préférence un moyen de refroidissement de l'azote comprimé.

Le contacteur peut ne pas comprendre de moyen de sortie de liquide.

Selon un autre objet de l'invention, il est prévu un appareil de séparation d'air intégré avec une turbine à gaz comprenant un appareil de séparation d'air, un appareil de compression d'azote provenant de l'appareil de séparation d'air, comprenant un compresseur ayant au moins deux étages, au moins un contacteur à contact direct disposé pour recevoir de l'azote comprimé dans un étage du compresseur et pour envoyer de l'azote comprimé et humidifié au prochain étage du compresseur ainsi que des moyens pour envoyer de l'eau à l'au moins un contacteur, une chambre de combustion, une turbine, des moyens pour envoyer un gaz de combustion de la chambre de combustion à la turbine et des moyens pour envoyer de l'azote comprimé et humidifié du dernier étage du compresseur à la chambre de combustion et/ou à la turbine.

L'invention sera décrite en plus de détail en se référant aux figures.

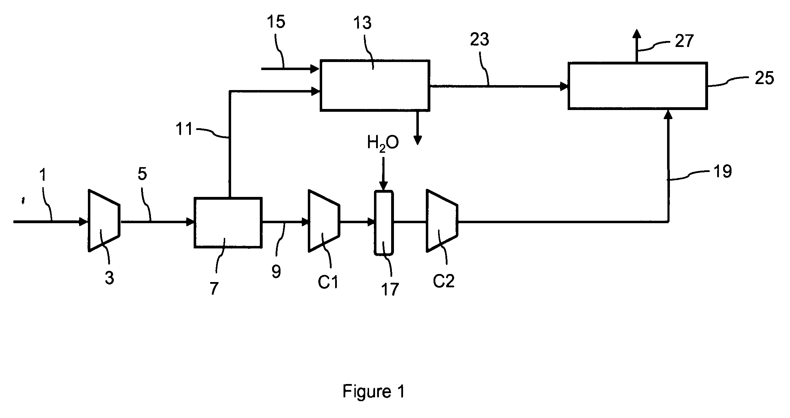

Dans la Figure 1, un débit d'air 1 est comprimé dans un compresseur d'air 3 et puis séparé dans un appareil de séparation d'air 7 par distillation cryogénique. Si le but de l'invention est simplement de produire de l'azote, d'autres méthodes de séparation peuvent être utilisées. L'azote 9 est comprimé dans un compresseur à deux étages C1; C2. Entre les deux étages et en aval de l'étage C1 se trouve un contacteur 17 à contact direct alimenté en tête par de l'eau. Toute l'eau est transférée au flux gazeux d'azote qui est ensuite comprimé dans l'étage C2. L'azote comprimé et humidifié 19 est envoyé à une chambre de combustion 25. La chambre de combustion 25 est également alimentée par un gaz de synthèse 23 provenant d'un gazéifieur 13. Le gazéifieur reçoit éventuellement de l'oxygène 11 de l'appareil de séparation d'air 7 et un carburant 15, par exemple du gaz naturel, du charbon.

Le gaz 27 produit par la chambre de combustion 25 est détendu dans une turbine pour fournir de l'électricité.

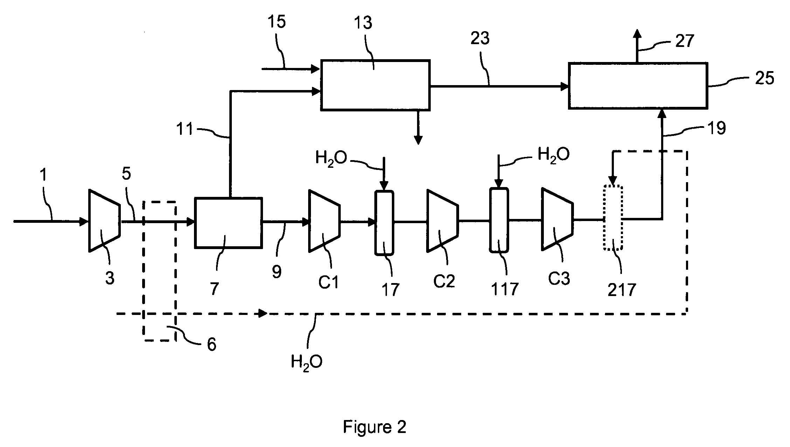

Dans la Figure 2, l'azote est comprimé dans un compresseur à trois étages, avec un contacteur entre chaque paire d'étages et en aval du dernier étage. Un débit d'air 1 est comprimé dans un compresseur d'air 3 et puis séparé dans un appareil de séparation d'air 7 par distillation cryogénique. Si le but de l'invention est simplement de produire de l'azote, d'autres méthodes de séparation peuvent être utilisées. L'azote 9 est comprimé dans un compresseur à trois étages C1, C2, C3. Entre les deux premiers étages et en aval du premier étage C1 se trouve un contacteur 17 à contact direct alimenté en tête par de l'eau. Toute l'eau est transférée au flux gazeux d'azote qui est ensuite comprimé dans l'étage C2. L'azote comprimé et humidifié 19 est envoyé à un deuxième contacteur 117 par contact direct où il est humidifié et ensuite comprimé dans l'étage C3. L'azote comprimé dans l'étage C3 est éventuellement envoyé à un troisième contacteur 217 pour être humidifié et est ensuite envoyé à une chambre de combustion 25 ou à une turbine qui détend un gaz de combustion produit par la chambre de combustion. L'eau envoyée au contacteur 217 peut éventuellement être préchauffée, éventuellement par échange de chaleur dans un échangeur 6 avec de l'air comprimé 1 envoyé à l'appareil 7, de l'air surpressé ou un autre débit chaud. Si l'eau servant à la saturation après dernier étage est plus chaude, elle va aussi préchauffer l'azote de dilution avant la chambre de combustion. La chambre de combustion 25 est également alimentée par un gaz de synthèse 23 provenant d'un gazéifieur 13. Le gazéifieur reçoit éventuellement de l'oxygène 11 de l'appareil de séparation d'air 7 et un carburant 15, par exemple du gaz naturel, du charbon.

Le gaz 27 produit par la chambre de combustion 25 est détendu dans une turbine pour fournir de l'électricité.

Un avantage majeur de l'invention est qu'il permet de remplacer ou de réduire la taille d'au moins un réfrigérant inter-étage du compresseur car le contacteur permet de réaliser le refroidissement requis.

## Revendications

1. Procédé d'alimentation en azote d'une chambre de combustion dans lequel : de l'azote gazeux (9) est soutiré d'un appareil de séparation d'air (7) à une première pression, l'azote est comprimé dans un compresseur d'azote (C1, C2, C3) et envoyé à une chambre de combustion (25) à une deuxième pression, qui est la pression de sortie du dernier étage (C3) du compresseur d'azote **caractérisé en ce que** le compresseur d'azote comprend au moins deux étages et entre deux étages du compresseur d'azote, l'azote est humidifié par contact direct en passant dans un contacteur (17, 117) alimenté en tête par de l'eau et l'azote humidifié est comprimé dans au moins un étage du compresseur d'azote pour former l'azote à la deuxième pression envoyé à la chambre de combustion.

2. Procédé selon la revendication 1 dans lequel toute l'eau envoyée au contacteur est transférée au flux gazeux d'azote.

3. Procédé selon la revendication 1 ou 2 dans lequel l'eau envoyée au contacteur (17, 117) est à une température qui diffère au plus de 10°C, voire de 5°C, de la température ambiante.

4. Procédé selon l'une des revendications précédentes dans lequel l'azote est également humidifié dans un contacteur (217) en aval du dernier étage du compresseur d'azote.

5. Procédé selon la revendication 4 dans lequel l'eau envoyée dans le contacteur (217) en aval du dernier étage du compresseur d'azote est préchauffée par un flux (1) de l'unité de séparation d'air.

6. Procédé selon l'une des revendications précédentes dans lequel l'azote (9) est humidifié uniquement par contact direct avec de l'eau.

7. Procédé selon l'une des revendications précédentes dans lequel un gaz de la chambre de combustion (25) est détendu dans une turbine.

8. Procédé selon l'une des revendications précédentes dans lequel la chambre de combustion (25) est alimentée par un carburant (23) provenant d'une unité de gazéification, l'unité de gazéification étant alimenté par de l'oxygène gazeux (11) provenant de l'appareil de séparation d'air (7).

9. Procédé selon l'une des revendications précédentes dans lequel seule une partie de l'eau envoyée au contacteur (17, 117, 217) est transférée au flux gazeux d'azote et l'eau excédentaire sortant du contacteur sous forme liquide est utilisée comme eau glacée dans l'unité de séparation d'air.

10. Procédé selon l'une des revendications précédentes dans lequel l'azote est refroidi par contact direct avec l'eau dans le contacteur (17, 117).

11. Appareil d'alimentation en azote d'une chambre de combustion comprenant un compresseur (C1, C2, C3), au moins un contacteur (17, 117) à contact direct disposé pour recevoir de l'azote comprimé provenant d'un étage du compresseur ainsi que des moyens pour envoyer de l'eau à l'au moins un contacteur, au moins une conduite pour envoyer de l'azote comprimé du dernier étage du compresseur à la chambre de combustion **caractérisé en ce que** le compresseur ayant au moins deux étages, **en ce que** le contacteur est relié en aval d'un étage du compresseur et en amont d'un autre étage du compresseur pour recevoir de l'azote comprimé et pour envoyer de l'azote humidifié à l'étage suivant, des moyens pour envoyer de l'azote comprimé et humidifié du dernier étage du compresseur à la chambre de combustion à travers l'au moins une conduite.

12. Appareil selon la revendication 11 comprenant des moyens (217) pour humidifier l'azote par contact direct en aval du dernier étage du compresseur.

13. Appareil selon la revendication 11 sans moyen d'humidification de l'azote en aval du dernier étage du compresseur.

14. Appareil selon l'une des revendications 11 à 13 dans lequel le contacteur (17, 117, 217) constitue un moyen de refroidissement de l'azote comprimé.

15. Appareil selon l'une des revendications 11 à 14 dans lequel le contacteur (17, 117, 217) ne comprend pas de moyen de sortie de liquide.

## Patentansprüche

1. Verfahren zur Versorgung einer Brennkammer mit Stickstoff, wobei der gasförmige Stickstoff (9) aus einer Vorrichtung zur Lufttrennung (7) bei einem ersten Druck entnommen wird, wobei der Stickstoff in einem Stickstoffkompressor (C1, C2, C3) komprimiert und in eine Brennkammer (25) mit einem zweiten Druck geschickt wird, wobei es sich um den Ausgangsdruck der letzten Stufe (C3) des Stickstoffkompressors handelt, **dadurch gekennzeichnet, dass** der Stickstoffkompressor mindestens zwei Stufen umfasst, und zwischen zwei Stufen des Stickstoffkompressors der Stickstoff durch direkten Kontakt im Durchlauf durch einen Kontaktor (17, 117), der am Kopf durch Wasser versorgt wird, befeuchtet wird, und der befeuchtete Stickstoff in mindestens einer Stufe des Stickstoffkompressors komprimiert wird, um den Stickstoff mit dem zweiten Druck zu bilden, der an die Brennkammer geliefert wird.

2. Verfahren nach Anspruch 1, wobei das gesamte Wasser, das an den Kontaktor geliefert wird, auf den gasförmigen Stickstofffluss übertragen wird.

3. Verfahren nach Anspruch 1 oder 2, wobei das Wasser, das an den Kontaktor (17, 117) geschickt wird, eine Temperatur aufweist, die mehr als 10 °C, sogar als 5 °C, von der Umgebungstemperatur verschieden ist.

4. Verfahren nach einem der vorhergehenden Ansprüche, wobei der Stickstoff auch in einem Kontaktor (217), vorgelagert von der letzten Stufe des Stickstoffkompressors, befeuchtet wird.

5. Verfahren nach Anspruch 4, wobei das Wasser, das in den Kontaktor (217), vorgelagert von der letzten Stufe des Stickstoffkompressors, geschickt wird, durch einen Fluss (1) der Einheit zur Lufttrennung vorerhitzt wird.

6. Verfahren nach einem der vorhergehenden Ansprüche, wobei der Stickstoff (9) einzig durch direkten Kontakt mit Wasser befeuchtet wird.

7. Verfahren nach einem der vorhergehenden Ansprüche, wobei ein Gas der Brennkammer (25) in eine Turbine expandiert wird.

8. Verfahren nach einem der vorhergehenden Ansprüche, wobei die Brennkammer (25) durch einen Brennstoff (23) versorgt wird, der aus einer Vergasungseinheit stammt, wobei die Vergasungseinheit durch gasförmigen Sauerstoff (11) versorgt wird, die aus der Vorrichtung zur Lufttrennung (7) stammt.

9. Verfahren nach einem der vorhergehenden Ansprüche, wobei nur ein Teil des Wassers, das an den Kontaktor (17, 117, 217) geschickt wird, an den gasförmigen Stickstofffluss übertragen wird, und das überschüssige Wasser, das aus dem Kontaktor in flüssiger Form austritt, als Eiswasser in der Einheit zur Lufttrennung verwendet wird.

10. Verfahren nach einem der vorhergehenden Ansprüche, wobei der Stickstoff durch direkten Kontakt mit dem Wasser im Kontaktor (17, 117) abgekühlt wird.

11. Vorrichtung zur Versorgung einer Brennkammer mit Stickstoff, umfassend einen Kompressor (C1, C2, C3), mindestens einen Kontaktor (17, 117) mit direktem Kontakt, der angeordnet ist, um komprimierten Stickstoff zu empfangen, der aus einer Stufe des Kompressors stammt, sowie Mittel, um Wasser an den mindestens einen Kontaktor zu schicken, mindestens eine Leitung, um komprimierten Stickstoff der letzten Stufe des Kompressors an die Brennkammer zu schicken, **dadurch gekennzeichnet, dass** der Kompressor mindestens zwei Stufen aufweist, dadurch, dass der Kontaktor vorgelagert mit einer Stufe des Kompressors und nachgelagert mit einer anderen Stufe des Kompressors verbunden ist, um komprimierten Stickstoff zu erhalten und um befeuchteten Stickstoff an die folgende Stufe zu schicken, Mittel, um komprimierten und befeuchteten Stickstoff von der letzten Stufe des Kompressors an die Brennkammer über mindestens eine Leitung zu schicken.

12. Vorrichtung nach Anspruch 11, umfassend Mittel (217), um den Stickstoff durch direkten Kontakt vorgelagert von der letzten Stufe des Kompressors zu befeuchten.

13. Vorrichtung nach Anspruch 11 ohne Mittel zur Befeuchtung des Stickstoffs vorgelagert von der letzten Stufe des Kompressors.

14. Vorrichtung nach einem der Ansprüche 11 bis 13, wobei der Kontaktor (17, 117, 217) ein Mittel zur Abkühlung des komprimierten Stickstoffs darstellt.

15. Gerät nach einem der Ansprüche 11 bis 14, wobei der Kontaktor (17, 117, 217) kein Mittel zum Ausgang von Flüssigkeit umfasst.

## Claims

1. Method for supplying a combustion chamber with nitrogen wherein: nitrogen gas (9) is extracted from an air separation device (7) at a first pressure, the nitrogen is compressed in a nitrogen compressor (C1, C2, C3) and sent to a combustion chamber (25) at a second pressure, which is the output pressure of the final stage (C3) of the nitrogen compressor **characterised in that** the nitrogen compressor comprises at least two stages and between two stages of the nitrogen compressor, nitrogen is humidified by direct contact by entering a contactor (17, 117) supplied at the top with water and the humidified nitrogen is compressed in at least one stage of the nitrogen compressor to form nitrogen at the second pressure sent to the combustion chamber.

2. Method according to claim 1 wherein all the water sent to the contactor is transferred to the nitrogen gas stream.

3. Method according to claim 1 or 2 wherein the water sent to the contactor (17, 117) is at a temperature differing by not more than 10°C, or even 5°C, from the ambient temperature.

4. Method according to any of the above claims wherein the nitrogen is also humidified in a contactor (217) downstream from the final stage of the nitrogen compressor.

5. Method according to claim 4 wherein the water sent to the contactor (217) downstream from the final stage of the nitrogen compressor is preheated by a stream (1) from the air separation unit.

6. Method according to any of the above claims wherein the nitrogen (9) is humidified solely by direct contact with water.

7. Method according to any of the above claims wherein a gas from the combustion chamber (25) is expanded in a turbine.

8. Method according to any of the above claims wherein the combustion chamber (25) is supplied with a fuel (23) from a gasification unit, the gasification unit being supplied with oxygen gas (11) from the air separation device (7).

9. Method according to any of the above claims wherein only a portion of the water sent to the contactor (17, 117, 217) is transferred to the nitrogen gas stream and the excess water outflowing from the contactor in liquid form is used as chilled water in the air separation unit.

10. Method according to any of the above claims wherein the nitrogen is cooled by direct contact with the water in the contactor (17, 117).

11. Apparatus for supplying a combustion chamber with nitrogen comprising a compressor (C1, C2, C3), at least one direct contact contactor (17, 117) arranged to receive compressed nitrogen from a stage of the compressor and means for sending water to at least one contactor, at least one pipe for sending compressed nitrogen from the final stage of the compressor to the combustion chamber **characterised in that** the compressor having at least two stages, **in that** the contactor is connected downstream from a stage of the compressor and upstream from a further stage of the compressor for receiving compressed nitrogen and for sending humidified nitrogen to the next stage, means for sending compressed and humidified nitrogen from the final stage of the compressor to the combustion chamber via at least one pipe.

12. Apparatus according to claim 11 comprising means (217) for humidifying the nitrogen by direct contact downstream from the final stage of the compressor.

13. Apparatus according to claim 11 without means for humidifying the nitrogen downstream from the final stage of the compressor.

14. Apparatus according to any of claims 11 to 13 wherein the contactor (17, 117, 217) forms means for cooling the compressed nitrogen.

15. Apparatus according to any of claims 11 to 14 wherein the contactor (17, 117, 217) does not comprise liquid output means.
